# EUROPÄISCHE PATENTANMELDUNG

(11) **EP 1 091 597 A1**
(43) Veröffentlichungstag der Anmeldung: **11.04.2001**
(21) Anmeldenummer: 00440245.9
(22) Anmeldetag: 15.09.2000
(51) Int. Cl.: H04Q 3/00

(54) **Verfahren , Knoten, Netzübergangseinrichtung, Computerprogramm und Speichermedium zum Erbringen von Diensten des Intelligenten Netzes für Teilnehmer des Internets**

(30) Priorität: 04.10.1999 DE 19947659
(71) Anmelder: ALCATEL, 75008 Paris (FR)
(72) Erfinder: Shen, Yuzhong, 70499 Stuttgart (DE); Gutmann, Ralph, 71254 Ditzingen (DE); Lauff, Uwe, 71277 Rutesheim (DE); Reichert, Andreas, 54341 Fell (DE); Ryll, Thomas, 70374 Stuttgart (DE); Kaiser, Bernhard, Dr., 71665 Vaihingen (DE)
(74) Vertreter: Brose, Gerhard, Dipl.-Ing.

(57) **Zusammenfassung**

Die Erfindung betrifft ein Verfahren zum Erbringen von Diensten des Intelligenten Netzes für Teilnehmer eines Paketdatennetzwerks (IP), insbesondere des Internets, mit den Schritten:
-- Aussenden einer Dienstanforderung von einem Endgerät (VoIP-TE) eines Teilnehmers,
-- Erkennen der Dienstanforderung als Anforderung eines Dienstes des Intelligenten Netzes,
-- Senden der Dienstanforderung an einen Dienststeuerungsrechner (SCP) des Intelligenten Netzes,
-- Erbringung des angeforderten Dienstes durch Interaktion zwischen dem Dienststeuerungsrechner des Intelligenten Netzes und dem Endgerät des Teilnehmers,
bei dem das Erkennen der Dienstanforderung und das Senden an einen Dienststeuerungsrechner noch im Paketdatennetzwerk oder an einer aus dem Paketdatennetzwerk herausführenden Netzübergangseinrichtung erfolgt, sowie einen Netzknoten, eine Netzübergangseinrichtung, ein Computerprogramm und ein Speichermedium.

## Beschreibung

Die Erfindung betrifft ein Verfahren zum Erbringen von Diensten des Intelligenten Netzes für Teilnehmer eines Paketdatennetzwerks, insbesondere des Internets, nach dem Oberbegriff des Anspruchs 1, einen Netzknoten nach dem Oberbegriff des Anspruchs 2, eine Netzübergangseinrichtung nach dem Oberbegriff des Anspruchs 3, ein Computerprogramm nach dem Oberbegriff des Anspruchs 4 und ein Speichermedium nach dem Oberbegriff des Anspruchs 5.

Dem herkömmlichen Nachrichtennetz für (leitungs-)vermittelte Verbindungen ist ein sogenanntes Intelligentes Netz (Intelligent Network, abgekürzt IN) überlagert, mit dessen Hilfe über den reinen Verbindungsaufbau hinaus eine Vielzahl anderer Dienste erbracht werden kann. Beispielsweise kann auf diese Weise durch eine überregional einheitliche Rufnummer die jeweils regional nächste und auch gerade besetzte Agentur eines Versandhauses erreicht werden. In der Regel sind hiermit auch besondere Tarife verbunden. Auch das Angebot besonderer Tarife kann für sich allein bereits ein solcher Dienst sein.

Um sich eines bestimmten Dienstes dieses Intelligenten Netzes zu bedienen muß man zunächst eine Dienstekennung wählen. Im oben genannten Beispiel ist diese Dienstekennung in den ersten Ziffern der überregional einheitlichen Rufnummer enthalten. Die allerersten Ziffern sind erforderlich, um einen sogenannten Service Switching Point SSP zu erreichen, der als sogenannte Service Switching Function SSF den gewünschten Dienst anhand der Dienstekennung vermittelt. Hierzu wertet der SSP die darauffolgenden Ziffern aus und wendet sich dann über einen sogenannten Service Transfer Point STP an einen Dienststeuerungsrechner, den sogenannten Service Control Point SCP, der dann die Erbringung des angeforderten Dienstes steuert. Der SSP ist die Schnittstelle zwischen dem herkömmlichen Nachrichtennetz und dem Intelligenten Netz. STP und SCP sind Bestandteile des Intelligenten Netzes. Dies ist allgemein bekannt und auch international genormt, beispielsweise durch ITU und ETSI.

Dem herkömmlichen Nachrichtennetz angegliedert oder überlagert ist auch ein Signalisierungsnetz, das heute üblicherweise mit dem Zeichengabeverfahren Nr. 7 der ITU-T arbeitet. Dieses Zeichengabeverfahren und das zugehörige Signalisierungsnetz sind allgemein bekannt. Beide werden häufig mit SS7, CCS#7 oder einfach #7 abgekürzt. Dieses Zeichengabeverfahren SS7 wird auch im Intelligenten Netz verwendet. Der oben genannte Service Transfer Point STP des Intelligenten Netzes ist dabei identisch mit dem gleich abgekürzten Signalling Transfer Point STP des Signalisierungsnetzes SS7.

Darüber hinaus, und auch insoweit allgemein bekannt, bestehen noch weitere Netze, die zumindest logisch von den oben genannten Netzen getrennt sind; physikalisch sind die verschiedenen Netze teilweise identisch. Betrachtet werden hier Paketdatennetze, deren wichtigstes derzeit das Internet ist. Ein zwar allgemein bekannter, aber zur Zeit noch wenig verbreiteter Dienst des Internets ist der Dienst "Voice over Internet Protocol", VoIP, mittels dessen über Internet Ferngespräche geführt werden können. Hierfür sind Übergänge, "Gateways", zwischen dem herkömmlichen Nachrichtennetz und dem Internet vorhanden. Über diese Übergänge kann ein Internet-Teilnehmer auch das Intelligente Netz erreichen und von dessen Diensten profitieren.

Die hierfür gefundene Lösung ergibt sich zwangsläufig durch Einführung von VoIP; sie ist weder in irgendeiner Weise optimiert noch auf andere Internet-Dienste oder gar auf andere Paketdatennetzwerke übertragbar. Neue Dienste, die im Internet oder einem anderen Paketdatennetzwerk grundsätzlich möglich wären, sind möglicherweise auf diesem Wege prinzipiell nicht erbringbar.

Der Erfindung liegt die Aufgabe zugrunde, ein Verfahren und geeignete Mittel zu schaffen, um durch das Intelligente Netz auch neu zu definierende Dienste für ein Paketdatennetzwerk, insbesondere für das Internet, erbringen zu können.

Diese Aufgabe wird erfindungsgemäß gelöst durch ein Verfahren nach der Lehre des Anspruchs 1, einen Netzknoten nach der Lehre des Anspruchs 2 und eine Netzübergangseinrichtung nach der Lehre des Anspruchs 3, ein Computerprogramm nach der Lehre des Anspruchs 4 und ein Speichermedium nach der Lehre des Anspruchs 5.

Der Grundgedanke der Erfindung ist dabei, eine der Service Switching Function SSF vergleichbare Funktion direkt vom Paketdatennetzwerk aus, insbesondere vom Internet aus, zugänglich zu machen. Damit entfallen dann Format- und Protokollumsetzungen zwischen Paketdatennetzwerk und herkömmlichem Nachrichtennetz.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt eine als bekannt unterstellte Situation.
- Figur 2: zeigt ein erstes Beispiel eines Netzes, in dem das erfindungsgemäße Verfahren durchgeführt werden kann und das einen erfindungsgemäßen Netzknoten aufweist.
- Figur 3: zeigt ein zweites Beispiel eines Netzes, in dem das erfindungsgemäße Verfahren durchgeführt werden kann und das eine erfindungsgemäße Netzübergangseinrichtung aufweist.
- Figur 4: zeigt ein weiteres Beispiel eines Netzes, in dem das erfindungsgemäße Verfahren durchgeführt werden kann und das eine gegenüber dem Beispiel nach Figur 3 abgewandelte erfindungsgemäße Netzübergangseinrichtung aufweist.

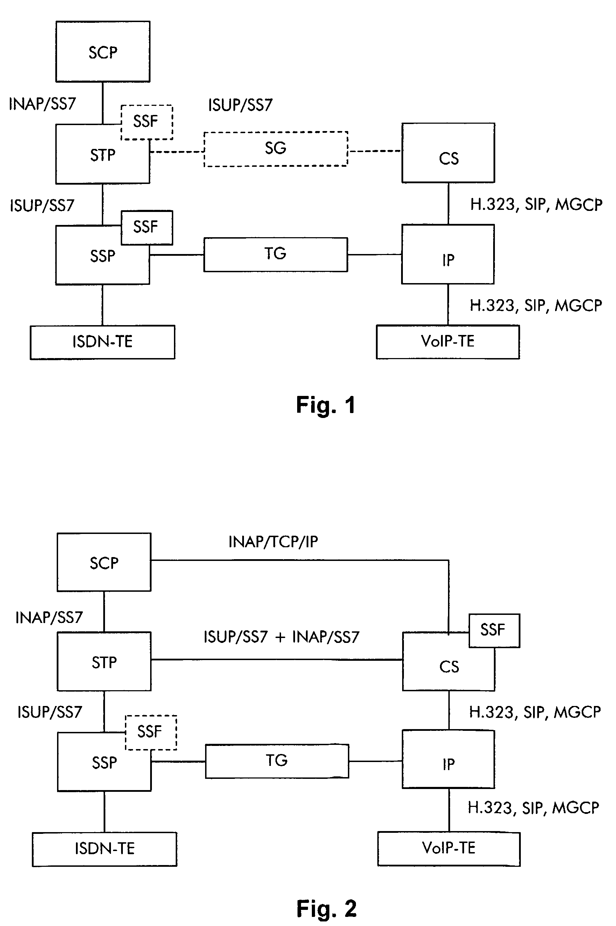

Anhand der Figur 1 wird zunächst die als bekannt unterstellte Situation beschrieben:

Links sind übereinander ein Teilnehmerendgerät ISDN-TE, eine Vermittlungsstelle SSP, ein Signalisiernetzknoten STP und ein Dienststeuerungsrechner SCP dargestellt. Sie sind in dieser Reihenfolge auch miteinander verbunden.

Rechts sind, ebenfalls übereinander, ein für VoIP geeigneter PC, hier als VoIP-TE bezeichnet, das Internet IP und ein Diensterechner CS für VoIP-Verbindungen dargestellt. Auch sie sind in dieser Reihenfolge miteinander verbunden.

Dazwischen sind Netzübergangseinrichtungen, sogenannte Gateways, eingezeichnet. Auf der Nutzsignalebene ist zwischen der Vermittlungsstelle SSP und dem Internet IP eine Nutzsignal-Netzübergangseinrichtung TG (Trunk Gateway) und auf der Signalisierungsebene zwischen dem Diensterechner CS und dem Signalisiernetzknoten STP eine Signalisierungs-Netzübergangseinrichtung SG (Signalling Gateway) dargestellt.

Der Vermittlungsstelle SSP und dem Signalisiernetzknoten STP sind hier noch Schnittstelleneinheiten mit Dienstvermittlungsfunktion SSF zugeordnet.

Der Übergang auf der Signalisierungsebene ist hier durch gestrichelte Darstellung der betroffenen Komponenten (Verbindung, SG, SSF) als optional gekennzeichnet.

Das Teilnehmerendgerät ISDN-TE ist hier beispielhaft als Teilnehmereinrichtung nach dem ISDN-Standard bezeichnet. Grundsätzlich kann jedes beliebige Teilnehmerendgerät, egal ob analog oder digital, egal ob für Sprache oder für Daten oder auch für beides, Funktionen des Intelligenten Netzes auslösen.

Die Vermittlungsstelle SSP ist hier als Vermittlungsstelle gekennzeichnet, die eine Dienstanforderung des Intelligenten Netzes erkennen kann, also als Service Switching Point SSP. Teilnehmerendgeräte, die nicht direkt an einer als SSP ausgebildeten Vermittlungsstelle angeschlossen sind, müssen zunächst auf normalem Weg zu einer solchen Vermittlungsstelle vermittelt werden.

Die in der Vermittlungsstelle SSP integrierte Dienstvermittlungsfunktion SSF erkennt IN-Rufe und leitet die Anfragen an den SCP weiter. Der Aufruf einer IN-Funktion ist an vordefinierte Trigger gekoppelt. Abgesehen von bestimmten Rufnummern, die einen Trigger-Punkt darstellen, werden beispielsweise auch bestimmte Zustände der Verbindung, wie besetzter Teilnehmer, oder unter Umständen bereits das Abheben des Handapparats, als Trigger-Punkt interpretiert. Die weiteren Aktionen können dann bereits vom IN bewertet werden.

Der Signalisiernetzknoten STP ist, wie oben schon erwähnt, gleichzeitig Service Transfer Point STP des Intelligenten Netzes und Signalling Transfer Point STP des Signalisierungsnetzes SS7. Zumindest als letzterer ist er allgemein bekannt; er übernimmt im Signalisierungsnetz die Funktion einer Vermittlung und eines Konzentrators.

Zwischen SSP und SCP wird das Zeichengabeverfahren Nr.7 benutzt, wobei zwischen SSP und STP das auf SS7 basierende ISUP-Protokoll (ISUP = ISDN User Part) und zwischen STP und SCP das ebenfalls auf SS7 basierende INAP-Protokoll (INAP = Intelligent Network Application Part) verwendet wird.

Der Dienststeuerungsrechner (Service Control Point) SCP steuert in Echtzeit die Anfragen der SSPs und damit letztlich die IN-Funktionen. Solche Service Control Points SCP sind allgemein bekannt und als solche nicht von der vorliegenden Erfindung erfaßt. Daß solche SCPs die an sie gestellten Aufgaben in Zusammenarbeit nicht nur mit den STPs, den SSPs und den Teilnehmerendgeräten, sondern auch mit Konfigurations-Datenbanken SMP (SMP = Service Management Point) oder auch noch mit weiteren Netzelementen erfüllen, ist ebenso bekannt und allenfalls insoweit von der vorliegenden Erfindung betroffen, als auch diese wieder solche weiteren Netzelemente beschreibt.

Der für VoIP geeignete PC, hier als VoIP-TE bezeichnet, ist nur ein Beispiel für ein an das Internet oder ein anderes Paketdatennetzwerk angeschlossenes Gerät, das aus der Sicht des Netzes nur als Endgerät anzusehen ist. Dies kann einerseits ein hochtechnologisiertes Multimedia-Endgerät sein oder andererseits ein sehr einfaches Gerät, das nur in irgendeiner Form überhaupt Dienste des Internet in Anspruch zu nehmen in der Lage ist. Dies könnte beispielsweise ein äußerlich auf ein Telephon reduzierter PC sein, der ausschließlich über das Internet VoIP-Verbindungen nach Art eines Telephons ermöglicht. Aber auch ein nur den e-mail-Dienst des Internet nützender PC könnte durch eine Verbindung über das Internet zum Intelligenten Netz beispielsweise zum Zwecke einer Auskunft bezüglich einer Internetadresse nach Art einer Telephonauskunft unterstützt werden.

Das Internet IP steht hier, wie allgemein in dieser Beschreibung, als Beispiel für ein Paketdatennetzwerk.

Der Diensterechner CS für VoIP-Verbindungen steht stellvertretend für beliebige Diensterechner, die das Internet unterstützen können.

Die Netzübergangseinrichtungen TG und SG auf der Nutzsignalebene bzw. der Signalisierungsebene sind allgemein bekannt oder doch wenigstens ohne weiteres für den Fachmann verständlich.

Auch bezüglich der Schnittstelleneinheiten mit Dienstvermittlungsfunktion SSF wird hier unterstellt, daß sie allgemein bekannt oder doch wenigstens ohne weiteres für den Fachmann verständlich sind. Die dem SSP angegliederte Schnittstelleneinheit SSF wirkt gegenüber der Nutzsignal-Netzübergangseinrichtung TG genauso wie der SSP selbst gegenüber einer angeschlossenen Vermittlungsstelle ohne die Funktion einer SSP. Die dem STP angegliederte Schnittstelleneinheit SSF wirkt gegenüber der Signalisierungs-Netzübergangseinrichtung SG genau so wie der STP selbst gegenüber einer weiteren SSP.

Das Internet weist nicht nur eine andere (logische) Struktur auf als das herkömmliche Nachrichtennetz, es wird auch nach anderen Regeln und Protokollen betrieben. Dies resultiert nicht nur aus der anderen Struktur, sondern auch aus den anderen Nachrichteninhalten.

Im Internet werden Multimedia-Kommunikationsbeziehungen zwischen Endteilnehmern aufgebaut. Unter Multimedia-Kommunikationsbeziehungen werden in einfachen Fällen reine Sprachverbindungen oder reine Bildverbindungen verstanden, in komplizierteren Fällen auch Kombinationen aus Sprache und Bild sowie eventuell zusätzlichen Daten, z.B. Computerdateien etc.. Reine Sprachverbindungen über Internet werden, wie schon erwähnt, auch als "Voice over Internet Protocol"-Verbindungen (VoIP) bezeichnet.

Die ITU-T-Recommendation H.323, Ausgabe 2/98 definiert eine mögliche Infrastruktur für audiovisuelle und multimediale Verbindungen über paketorientierte Netzwerke, im folgenden nur als multimediale Verbindungen bezeichnet. Eine solche Infrastruktur wird unter anderem auch für "Voice over Internet Protocol"- Verbindungen benötigt. Auch eine Vielzahl von Abläufen und Protokollen wird durch diese ITU-T-Recommendation H.323 oder durch Verweise aus dieser heraus definiert.

Alternativen und Ergänzungen zu Infrastruktur und Protokollen nach der ITU-T-Recommendation H.323 werden beispielsweise innerhalb der IETF (Internet Engineering Task Force) als Media Gateway Control Protocol MGCP und von einer "Network Working Group" als "Session Initiation Protocol" SIP diskutiert.

Soll also vom PC VoIP-TE aus das Intelligente Netz aufgerufen werden, so wird zunächst aus den im Internet gemäß ITU-T-Recommendation H.323 gültigen Formaten und Protokollen im TG auf der Nutzsignalebene oder im SG auf der Signalisierebene auf die im herkömmlichen Nachrichtennetz gültigen Formate und Protokolle umgesetzt. Soweit die Signalisierung betroffen ist, wird hier auf das auf SS7 basierende ISUP-Protokoll umgesetzt. In der dem STP oder dem SSP angegliederten Schnittstelleneinheit SSF wird dann, wie bei solchen Signalisierungen, die aus dem herkömmlichen Nachrichtennetz selbst kommen, die für das Intelligente Netz bestimmte Signalisierung erkannt und entsprechend bearbeitet.

Anhand der Figur 2 wird nun ein erstes Beispiel eines Netzes beschrieben, in dem das erfindungsgemäße Verfahren durchgeführt werden kann und das einen erfindungsgemäßen Netzknoten aufweist. Das erfindungsgemäße Verfahren und der erfindungsgemäße Netzknoten werden dabei mit erläutert.

Gegenüber der Situation nach Figur 1 sind hier zunächst die dem STP und dem SSP angegliederten Schnittstelleneinheiten SSF entfallen. Dagegen ist hier nun dem Diensterechner CS für VoIP-Verbindungen eine solche Schnittstelleneinheit SSF angegliedert. Die Signalisierungs-Netzübergangseinrichtung SG ist nun entfallen; die Verbindung zwischen dem Diensterechner CS und dem Signalisiernetzknoten STP ist nun nicht mehr nur als optional dargestellt. Weiter ist zusätzlich eine direkte Verbindung zwischen dem Diensterechner CS (letztlich von dessen Schnittstelleneinheit SSF) und dem Dienststeuerungsrechner SCP dargestellt.

Hier äußert sich der Grundgedanke der Erfindung, eine der Service Switching Function SSF vergleichbare Funktion direkt vom Paketdatennetzwerk aus, insbesondere vom Internet aus, zugänglich zu machen, in der dem Diensterechner CS angegliederten Schnittstelleneinheit SSF. Diese Schnittstelleneinheit SSF weist eine Auswerteeinheit zum Erkennen einer Dienstanforderung als Anforderung eines Dienstes des Intelligenten Netzes, eine Schnittstelle zu dem Intelligenten Netz und eine Steuereinheit zum Senden der Dienstanforderung an das Intelligente Netz und zur interaktiven Unterstützung der Diensterbringung auf. Abweichungen dieser Einheiten von den beim Stand der Technik für diese Funktionen erforderlichen Einheiten sind nur durch die anderen Formate und Protokolle bedingt. Diese sind aber auch beim Stand der Technik, wenn auch an anderer Stelle erforderlich. Die Schnittstelleneinheit SSF übernimmt ganz direkt die Funktion des SSP und nimmt direkt mit dem STP oder dem SCP Kontakt auf, je nachdem, welche Funktion erforderlich ist. Soweit Nutzinformation, etwa für eine Sprachausgabe, auszutauschen ist, bleibt hier nach wie vor der Weg über die Nutzsignal-Netzübergangseinrichtung TG.

Eine Umsetzung der Formate und Protokolle erfolgt hier nur insoweit, als dies zum unmittelbaren Ansprechen von STP oder SCP erforderlich ist. Hierfür werden das auf SS7 basierende ISUP-Protokoll und das ebenfalls auf SS7 basierende INAP-Protokoll verwendet. Eine besondere Vereinfachung ergibt sich dann, wenn der SCP an seiner Schnittstelle zum Internet derart ertüchtigt wird, daß er direkt mit dem im Internet verwendeten Protokoll TCP/IP arbeiten kann. (TCP = Transmission Control Protocol, IP = Internet Protocol).

Der Diensterechner CS mit der angegliederten Schnittstelleneinheit SSF bildet damit einen erfindungsgemäßen Netzknoten.

Wie ohne weiteres zu erkennen ist, wäre hier der Umweg zum Dienststeuerungsrechner SCP über das herkömmliche Nachrichtennetz nicht erforderlich; ein Dienststeuerungsrechner SCP könnte vielmehr direkt dem Internet angegliedert sein.

Auch wenn durch die vorliegende Erfindung die Zusammenarbeit zwischen Internet und Intelligentem Netz erleichtert werden soll, dann soll dies nicht dazu führen, daß bestehende Dienste deswegen umgerüstet werden müssen. Deshalb wird auch weiterhin der SSP eine SSF angegliedert sein (gestrichelt in Figur 2), über die bestehende Dienste abgewickelt werden können.

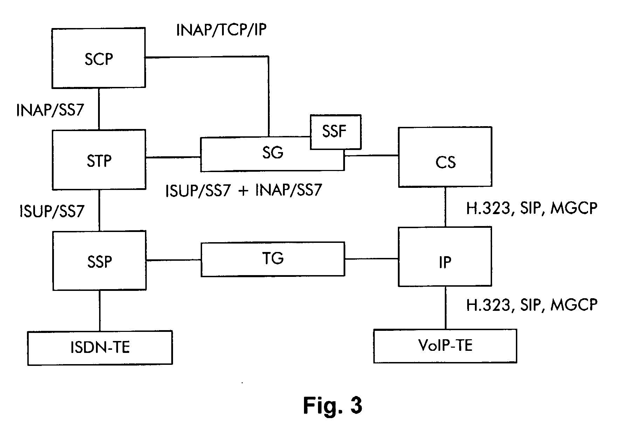

Anhand der Figur 3 wird nun ein zweites Beispiel eines Netzes beschrieben, in dem das erfindungsgemäße Verfahren durchgeführt werden kann und das eine erfindungsgemäße Netzübergangseinrichtung aufweist. Das erfindungsgemäße Verfahren und die erfindungsgemäße Netzübergangseinrichtung werden dabei mit erläutert. (Unter Berücksichtigung des dem Internet direkt angegliederten Dienststeuerungsrechners SCP ist dies eigentlich bereits das dritte Beispiel.)

Das Beispiel nach Figur 3 unterscheidet sich vom Beispiel nach Figur 2 dadurch, daß noch eine Signalisierungs-Netzübergangseinrichtung SG vorhanden ist und daß die Schnittstelleneinheit SSF hier dieser und nicht dem Diensterechner CS angegliedert ist. Anstelle der direkten Verbindung zwischen dem Diensterechner CS und dem Dienststeuerungsrechner SCP ist hier nun eine direkte Verbindung zwischen der Signalisierungs-Netzübergangseinrichtung SG (letztlich ebenfalls wieder von deren Schnittstelleneinheit SSF) und dem Dienststeuerungsrechner SCP dargestellt. Gemäß dem Grundgedanken der Erfindung und in Abwandlung zu Figur 1 ist hier die Schnittstelleneinheit SSF als auf der Internetseite der Signalisierungs-Netzübergangseinrichtung SG befindlich anzusehen. Die Signalisierungs-Netzübergangseinrichtung SG bildet hier zusammen mit der Schnittstelleneinheit SSF eine erfindungsgemäße Netzübergangseinrichtung. Die Unterschiede gegenüber der Situation nach Figur 2 liegen hier mehr in der räumlichen Aufteilung und Zuordnung als in einer andersartigen Funktion.

Auch die der Signalisierungs-Netzübergangseinrichtung SG angegliederte Schnittstelleneinheit SSF weist, wie schon die Schnittstelleneinheit SSF nach Figur 2, eine Auswerteeinheit zum Erkennen einer Dienstanforderung als Anforderung eines Dienstes des Intelligenten Netzes, eine Schnittstelle zu dem Intelligenten Netz und eine Steuereinheit zum Senden der Dienstanforderung an das Intelligente Netz und zur interaktiven Unterstützung der Diensterbringung auf. Bezüglich der Abweichungen dieser Einheiten von den beim Stand der Technik für diese Funktionen erforderlichen Einheiten gilt das dort gesagte entsprechend.

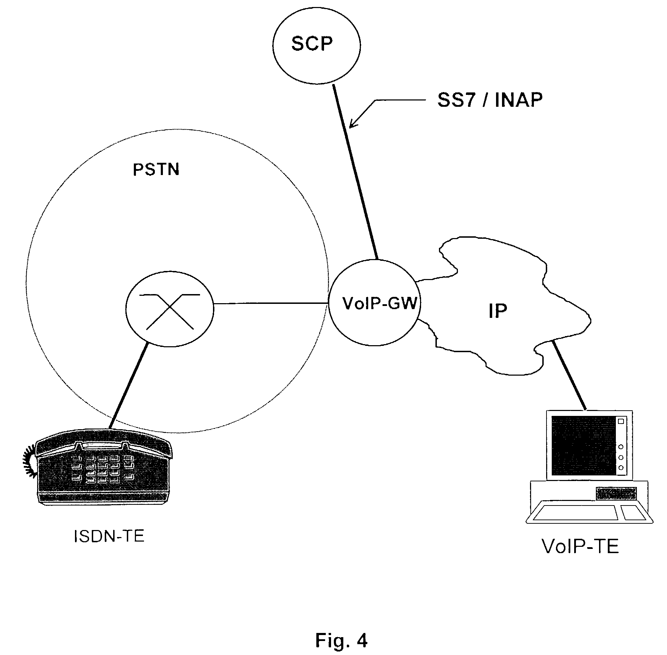

Anhand der Figur 4 wird am Beispiel eines speziellen Dienstes, nämlich des bereits eingangs genannten Dienstes "Voice over Internet Protocol", VoIP, ein weiteres Beispiel eines Netzes gezeigt, in dem das erfindungsgemäße Verfahren durchgeführt werden kann und das eine gegenüber dem Beispiel nach Figur 3 abgewandelte erfindungsgemäße Netzübergangseinrichtung aufweist.

Das Beispiel nach Figur 4 ist nicht nur graphisch anders als die vorangegangenen Beispiele. Das herkömmliche Nachrichtennetz ist hier nicht mehr weiter gegliedert und nur noch durch ein Symbol als vermitteltes Netz gekennzeichnet, das hier mit PSTN (Public Switched Telephone Network) bezeichnet ist. Die Gliederung dieses Netzes, insbesondere dessen Beziehung zum Intelligenten Netz, ist hier ohne Bedeutung.

Wichtig hier ist die Verbindung zwischen dem Internet und dem herkömmlichen Nachrichtennetz. Diese Verbindung ist hier als Netzübergangseinrichtung dargestellt und durch ihre Beschriftung VoIP-GW als ein "Gateway" für den Dienst "Voice over Internet Protocol", VoIP, bezeichnet. Diese Netzübergangseinrichtung VoIP-GW schafft die Möglichkeit, zwischen einem entsprechend ausgerüsteten und am Internet angeschlossenen PC und einem am herkömmlichen Nachrichtennetz angeschlossenen Sprachendgerät über Sprache zu kommunizieren. Hierfür ist aber eine entsprechende Umadressierung zwischen den beiden Netzen erforderlich, wozu das Intelligente Netz angesprochen wird. Im Gegensatz zum Stand der Technik, beispielsweise nach Figur 1, wird hier jedoch das Intelligente Netz nicht über das herkömmliche Nachrichtennetz erreicht, sondern, entsprechend der vorliegenden Erfindung, direkt von dieser Netzübergangseinrichtung VoIP-GW aus. Im Intelligenten Netz wird hier direkt der Dienststeuerungsrechner SCP angesprochen. Auch diese Netzübergangseinrichtung VoIP-GW weist die den vorigen Beispielen entsprechenden Komponenten auf. Inwieweit die einzelnen Komponenten der Netzübergangseinrichtung VoIP-GW oder eines der oben genannten Netzelemente durch separate Baugruppen oder durch separate Programmodule gebildet werden, ist dabei unwesentlich.

Es ist ohne weiteres ersichtlich, daß mit der Struktur nach Figur 4 das Intelligente Netz nicht nur weitere Dienste für den Dienst "Voice over Internet Protocol", VoIP, bereitstellen kann, sondern daß auch für Nicht-Sprachdienste durchaus auch andersartige Hilfsdienste erbracht werden können.

Die für die Umsetzung der Erfindung erforderlichen, auf einem geeigneten Speichermedium zu speichernden und durch einen Computer lesbaren und ausführbaren Computerprogramme ergeben sich für den Fachmann unter Berücksichtigung der oben genannten Gesichtspunkte, der verschiedenen Formate und Protokolle und der jeweils zu unterstützenden Dienste ohne weiteres erfinderisches Zutun.

## Patentansprüche

1. Verfahren zum Erbringen von Diensten des Intelligenten Netzes für Teilnehmer eines Paketdatennetzwerks (IP), insbesondere des Internets, mit den Schritten:
-- Aussenden einer Dienstanforderung von einem Endgerät (VoIP-TE) eines Teilnehmers,
-- Erkennen der Dienstanforderung als Anforderung eines Dienstes des Intelligenten Netzes,
-- Senden der Dienstanforderung an einen Dienststeuerungsrechner (SCP) des Intelligenten Netzes und
-- Erbringung des angeforderten Dienstes durch Interaktion zwischen dem Dienststeuerungsrechner des Intelligenten Netzes und dem Endgerät des Teilnehmers,
**dadurch gekennzeichnet, daß** das Erkennen der Dienstanforderung und das Senden an einen Dienststeuerungsrechner noch im Paketdatennetzwerk oder an einer aus dem Paketdatennetzwerk herausführenden Netzübergangseinrichtung erfolgt.

2. Netzknoten (CS,SSF) für ein Paketdatennetzwerk (IP), insbesondere für das Internet, **dadurch gekennzeichnet, daß** er eine Auswerteeinheit (SSF) zum Erkennen einer Dienstanforderung als Anforderung eines Dienstes des Intelligenten Netzes aufweist, daß er eine Schnittstelle zu dem Intelligenten Netz aufweist und daß er eine Steuereinheit zum Senden der Dienstanforderung an das Intelligente Netz und zur interaktiven Unterstützung der Diensterbringung aufweist.

3. Netzübergangseinrichtung zum Übergang zwischen einem Paketdatennetzwerk und einem Nachrichtennetz für vermittelte Verbindungen, **dadurch gekennzeichnet**, daß sie eine Auswerteeinheit zum Erkennen einer Dienstanforderung als Anforderung eines Dienstes des Intelligenten Netzes aufweist, daß sie eine Schnittstelle zu dem Intelligenten Netz aufweist und daß sie eine Steuereinheit zum Senden der Dienstanforderung an das Intelligente Netz und zur interaktiven Unterstützung der Diensterbringung aufweist.

4. Computerprogramm zum Erbringen von Diensten des Intelligenten Netzes für Teilnehmer eines Paketdatennetzwerks, insbesondere des Internets, **dadurch gekennzeichnet**, daß das Computerprogramm Code enthält, mit dem die Schritte des Verfahrens nach Anspruch 1 ausgeführt werden können, wenn das Computerprogramm auf einem Computer ausgeführt wird.

5. Speichermedium zum Erbringen von Diensten des Intelligenten Netzes für Teilnehmer eines Paketdatennetzwerks, insbesondere des Internets, **dadurch gekennzeichnet**, daß das Speichermedium durch einen Computer lesbar ist und Computerprogramm-Code enthält, mit dem die Schritte des Verfahrens nach Anspruch 1 ausgeführt werden können, wenn das Computerprogramm auf einem Computer ausgeführt wird.

6. Verfahren nach Anspruch 1, dadurch gekennzeichnet, daß beim Senden der Dienstanforderung und beim Erbringen des Dienstes unmittelbar zwischen den im Paketdatennetzwerk verwendeten Formaten und Protokollen (H.323, SIP, MGCP) und den im Intelligenten Netz verwendeten Formaten und Protokollen (ISUP/SS7, INAP/SS7) umgesetzt wird.
